# EUROPÄISCHE PATENTSCHRIFT

(11) **EP 3 765 235 B1**
(45) Veröffentlichungstag und Bekanntmachung des Hinweises auf die Patenterteilung: **04.10.2023**
(21) Anmeldenummer: 19728944.0
(22) Anmeldetag: 04.06.2019
(51) Int. Cl.: B23Q 39/00, B23Q 3/155

(54) **WERKZEUGREVOLVER**
TOOL TURRET
TOURELLE PORTE-OUTILS

(30) Priorität: 12.06.2018 DE 102018004677
(43) Veröffentlichungstag der Anmeldung: 20.01.2021
(73) Patentinhaber: Kolibri Beteiligungsgesellschaft mbH & Co. KGaA, 14532 Kleinmachnow (DE)
(72) Erfinder: EWALD, Marius, 72793 Pfullingen (DE)
(74) Vertreter: Bartels und Partner, Patentanwälte
(86) Internationale Anmeldenummer: PCT/EP2019/064462
(87) Internationale Veröffentlichungsnummer: WO 2019/238468

(56) Entgegenhaltungen:
- DE-A1-102005 033 890
- DE-A1-102010 021 949
- DE-A1-102010 044 968
- DE-A1-102012 104 490

## Beschreibung

Die Erfindung betrifft einen Werkzeugrevolver, insbesondere vorgesehen für den Einsatz bei einer Werkzeugmaschine, mit den Merkmalen im Oberbegriff des Anspruchs 1.

Derartige Werkzeugrevolver sind beispielsweise aus DE 10 2005 033 890 A1 oder DE 10 2014 003 336 A1 bekannt. Bei den Bearbeitungswerkzeugen, die zum Einsatz kommen sollen, handelt es sich hauptsächlich um Werkzeuge zur spanenden Bearbeitung, wie Bohr-, Dreh- oder Fräswerkzeuge. Zur Anpassung an jeweilige unterschiedliche Bearbeitungsaufgaben sind Wechselvorgänge durchzuführen, bei denen ein in einer betreffenden Arbeitsposition befindlicher Werkzeughalter für Bearbeitungswerkzeuge der einen Art ausgewechselt und durch einen Werkzeughalter für Bearbeitungswerkzeuge anderer Art ersetzt wird. Bei bestimmten Fertigungsaufgaben, wie bei einer Fertigung in Kleinserie, ist ein häufiger Wechsel unterschiedlicher zum Einsatz kommender Werkzeughalter erforderlich. Dies führt zu einem erheblichen Arbeitsanfall für das Bedienpersonal und dadurch zu einer Erhöhung der Bearbeitungskosten.

Im Hinblick auf diese Problematik stellt sich die Erfindung die Aufgabe, den Austausch von Werkzeughaltern an einem Werkzeugrevolver in besonders rationeller, kostengünstiger und zuverlässiger Weise zu ermöglichen.

Erfindungsgemäß ist diese Aufgabe durch einen Werkzeugrevolver gelöst, der die Merkmale des Patentanspruchs 1 in seiner Gesamtheit aufweist. Vorteilhafte Ausgestaltungen der Erfindung sind Gegenstand der Unteransprüche.

Ein erfindungsgemäßer Werkzeugrevolver zeichnet sich gemäß dem kennzeichnenden Teil des Patentanspruchs 1 dadurch aus, dass bei ausgekuppeltem Antrieb unter Stillsetzen des Bearbeitungswerkzeuges die Festlegeeinrichtung mittels dieses Antriebes betätigbar ist, und dass die Festlegeeinrichtung einen Klinkentrieb aufweist, mit paarweise einander zugeordneten Steuer- und Rastklinken, die von einer Betätigungseinrichtung derart ansteuerbar sind, dass sie in ihrer verrasteten Stellung einen Halter mit der Werkzeugscheibe verbinden und in ihrer gelösten Stellung diesen Halter freigeben.

Die Steuer- und Rastklinken ermöglichen in einem Betätigungsschritt durch entsprechende Verrastung mit dem Halter bzw. dessen Freigabe einen sicheren und schnellen Werkzeughalterwechsel. Ferner lassen sich hierdurch hohe Haltekräfte am jeweils eingesetzten Halter im Rahmen der Bearbeitung erreichen.

Der Antrieb, der im regulären Betrieb des Werkzeugrevolvers zum Antrieb eines in den zugehörigen Halter aufgenommenen Bearbeitungswerkzeuges dient, wird erfindungsgemäß auch für den Werkzeughalterwechsel und den hierfür erforderlichen Antrieb der Festlegeeinrichtung eingesetzt. Ein separater Antrieb für die Festlegeeinrichtung ist somit entbehrlich. Die Festlegeeinrichtung ist die zentrale Komponente für den Werkzeughalterwechsel und wird erfindungsgemäß über den Werkzeug-Direktantrieb betätigt.

Der Werkzeughalterwechsel ist mit wenigen Schritten, dem Auskuppeln des Antriebes zum Stillsetzen des Bearbeitungswerkzeuges und dem Antreiben der Festlegeeinrichtung zum Lösen des einen Werkzeughalters und zum Festlegen des anderen Werkzeughalters, durchführbar. Ein Austausch des einen Werkzeughalters für Bearbeitungswerkzeuge der einen Art mit einem anderen Werkzeughalter für Bearbeitungswerkzeuge der anderen Art ist dergestalt besonders rationell und kostengünstig durchführbar.

Die in den erfindungsgemäß ausgestalteten Werkzeugrevolver integrierte Festlegeeinrichtung ermöglicht einen automatischen Werkzeughalterwechsel und somit einen reibungslosen Betrieb eines Drehmaschinenzentrums bei gleichzeitig hoher Flexibilität bezüglich der Breite des Fertigungsspektrums. Der Ablauf des Wechselvorgangs bis zur Freigabe des auszuwechselnden Werkzeughalters erfolgt bevorzugt maschinengesteuert. Bei einem Abnehmen des auszutauschenden Werkzeughalters und einem Einsetzen des neuen Werkzeughalters mittels eines Handhabungsroboters ist ein vollautomatischer Werkzeughalterwechsel und somit ein zumindest teilautomatisierter Betrieb der Gesamtanlage realisierbar. Der automatische Werkzeughalterwechsel verringert die Rüstkosten und führt zu einer entsprechenden Reduzierung von Arbeitszeit und Arbeitskosten beim Betrieb des erfindungsgemäßen Werkzeugrevolvers.

Bei einer bevorzugten Ausführungsform des erfindungsgemäßen Werkzeugrevolvers ist die Festlegeeinrichtung mittels des Antriebes in der Arbeitsposition und/oder in einer Wechselposition betätigbar, die von der Arbeitsposition verschieden, vorzugsweise auf der gegenüberliegenden Seite der Arbeitsposition, an der Werkzeugscheibe liegt. Ein Werkzeughalterwechsel in der Arbeitsposition hat den Vorteil einer guten Zugänglichkeit zur Abnahme des auszuwechselnden Werkzeughalters und zum Einsetzen des neuen Werkzeughalters, da hierfür der zugehörige Bearbeitungsbereich für Werkstücke mitgenutzt werden kann. Eine von der Arbeitsposition verschiedene Wechselposition ermöglicht, ungestört von Werkstückhalterungen oder dergleichen den einen Werkzeughalter abzunehmen und den anderen Werkzeughalter einzusetzen. Hierfür ist vorzugsweise ein Handhabungssystem, wie ein Roboter, vorgesehen. Eine der Arbeitsposition gegenüberliegende Wechselposition hat den Vorteil, dass die Antriebsachse des Werkzeugantriebes parallel, besonders bevorzugt koaxial, zur Antriebsachse der Festlegeeinrichtung in der Wechselposition ausgerichtet ist und unmittelbar für deren Antrieb eingesetzt werden kann. Dergestalt lassen sich entfernt von der Arbeitsposition in gut zugänglicher Weise Wechselvorgänge für Halter mit und ohne Bearbeitungswerkzeug vornehmen.

Bei einer bevorzugten Ausführungsform des erfindungsgemäßen Werkzeugrevolvers ist durch eine drehende Bewegung der Betätigungseinrichtung mittels des Antriebes diese Drehbewegung in eine translatorische Bewegung für die Steuerklinken umgesetzt, die in einer Richtung das Einfallen der Rastklinken in deren gelösten Stellung in einen Aufnahmeraum der Steuerklinken und in der entgegengesetzten Richtung das Verdrängen der Rastklinken aus dem Aufnahmeraum in Richtung ihrer verrasteten Stellung bewirkt. Hieraus ergibt sich der Vorteil eines in kompakter Bauweise realisierbaren Klinkentriebs samt zugehöriger Betätigungseinrichtung.

Bei einer weiteren bevorzugten Ausführungsform des erfindungsgemäßen Werkzeugrevolvers sind bei einem Verbringen der Rastklinken in ihre gelöste Stellung die Steuerklinken in Richtung des Halters bewegt und heben diesen mit einer vorgebbaren Lösekraft von seinem Sitz an der Werkzeugscheibe ab. Besonders bevorzugt sind die von der Klinkenanordnung bewirkten Kräfte derart gewählt, dass eine geringstmögliche Lösekraft zum Abheben des Halters von der Werkzeugscheibe erforderlich ist. Dies ermöglicht einen Werkzeughalterwechsel am erfindungsgemäßen Werkzeugrevolver mit geringen Betätigungskräften.

Bei einer weiteren bevorzugten Ausführungsform des erfindungsgemäßen Werkzeugrevolvers sind die Rastklinken jeweils um eine Schwenkachse drehbar gelagert, und die Steuerklinken sind einstückiger Bestandteil einer Steuerhülse, die entlang einer Aufnahmehülse bewegbar geführt ist, die zumindest ein Teil der Abtriebswelle für das jeweilige Bearbeitungswerkzeug umfasst. Durch die Aufnahmehülse werden etwaige Hemmnisse zwischen der zumindest teilweise umfassten Abtriebswelle für das Bearbeitungswerkzeug und dem über die Steuerhülse betätigten Klinkentrieb für die Festlegeeinrichtung im Betrieb wirksam vermieden und eine gleichförmig eingeleitete Betätigungskraft für die Rastklinken erreicht.

Weiter ist vorteilhaft, dass die Betätigungseinrichtung in Richtung ihres einen freien Endes über eine Gewindestrecke in Eingriff mit der Steuerhülse ist und in Richtung ihres anderen freien Endes eine Mitnahme aufweist für den Angriff eines Mitnehmers einer Antriebswelle des Antriebes. In dieser besonderen Ausführungsform ist in einfacher Weise eine Umsetzung der drehenden Bewegung der Antriebswelle in eine translatorische Bewegung der Steuerklinke als Betätigungseinrichtung realisiert. Je nach Drehrichtung der Antriebswelle wird die Steuerhülse in die eine oder in die andere Richtung bewegt. Die Betätigungsgeschwindigkeit für die Festlegeeinrichtung ist durch die Drehgeschwindigkeit des Antriebes vorgebbar.

Bei einer bevorzugten Ausführungsform des erfindungsgemäßen Werkzeugrevolvers ist für den Antrieb des Bearbeitungswerkzeuges mittels der Kupplungseinrichtung und das Ansteuern der Festlegeeinrichtung in der Arbeitsposition die Antriebswelle des Antriebes axial verschiebbar in der Werkzeugscheibe geführt und in ihrer vordersten Kupplungsposition unter Durchgreifen der Mitnahme mit ihrem Mitnehmer das Bearbeitungswerkzeug des Halters bei inaktiver Festlegeeinrichtung antreibbar und in einer demgegenüber rückgezogenen Position bei Unterbrechung dieses Antriebes kommt der an der Antriebswelle angeordnete Mitnehmer unter Aktivieren der Festlegeeinrichtung in Anlage mit der Mitnahme der Betätigungseinrichtung. Die axiale Verschiebbarkeit erlaubt eine Nutzung des Antriebes zum Werkzeughalterwechsel bei stillgesetztem Bearbeitungswerkzeug sowie einen störungsfreien Betrieb vor und nach einem Werkzeughalterwechsel ohne Betätigung der Festlegeeinrichtung.

Bei einer weiteren bevorzugten Ausführungsform des erfindungsgemäßen Werkzeugrevolvers weist für ein Ansteuern der Festlegeeinrichtung in der Wechselposition die Antriebswelle den Mitnehmer auf ihrer der Kupplungseinrichtung gegenüberliegenden Seite auf. Hieraus ergibt sich der Vorteil eines ständig für einen Werkzeughalterwechsel bereitstehenden Mitnehmers in der zugehörigen Wechselposition.

Vorzugsweise ist der Halter ein Spindelkopf und weist eine von der Antriebswelle antreibbare Werkzeugspindel auf. Besonders bevorzugt ist der Werkzeughalter als Spindelkopf gemäß DE 101 21 694 A1 ausgebildet. Es versteht sich, dass auch andersartige Bearbeitungswerkzeuge und Abtriebswellen in den Halter aufnehmbar bzw. an diesem anordenbar sein können. Des Weiteren kann auch mindestens ein Werkzeughalter für Bearbeitungswerkzeuge, die keinen Antrieb benötigen, vorgesehen sein. In diesem Fall wird der Antrieb nur beim Werkzeughalterwechsel zum Betätigen der Festlegeeinrichtung eingesetzt.

Weitere Vorteile und Merkmale der Erfindung ergeben sich aus den Figuren und der nachfolgenden Beschreibung der Zeichnung.

Die in den Figuren gezeigten Merkmale sind rein schematisch und nicht maßstäblich zu verstehen. Es zeigen:
- Fig. 1: einen Längsschnitt durch ein Ausführungsbeispiel des erfindungsgemäßen Werkzeugrevolvers mit einem in einer Arbeitsposition an der Werkzeugscheibe angeordneten Halter;
- Fig. 2: einen Längsschnitt durch ein weiteres Ausführungsbeispiel des erfindungsgemäßen Werkzeugrevolvers mit einem in einer Wechselposition an der Werkzeugscheibe angeordneten Halter;
- Fig. 3a und 3b: teilweise im Längsschnitt, teilweise in Ansicht dargestellt, eine Kupplungseinrichtung für einen Werkzeugrevolver nach den Fig. 1 und 2 in verschiedenen Kupplungszuständen; und
- Fig. 4a und 4b: jeweils einen vergrößerten Teilbereich des in Fig. 1 gezeigten Längsschnittes durch die Werkzeugscheibe zur Veranschaulichung der Funktionsweise des Klinkentriebs der Festlegeeinrichtung in der verrasteten und in der gelösten Stellung.

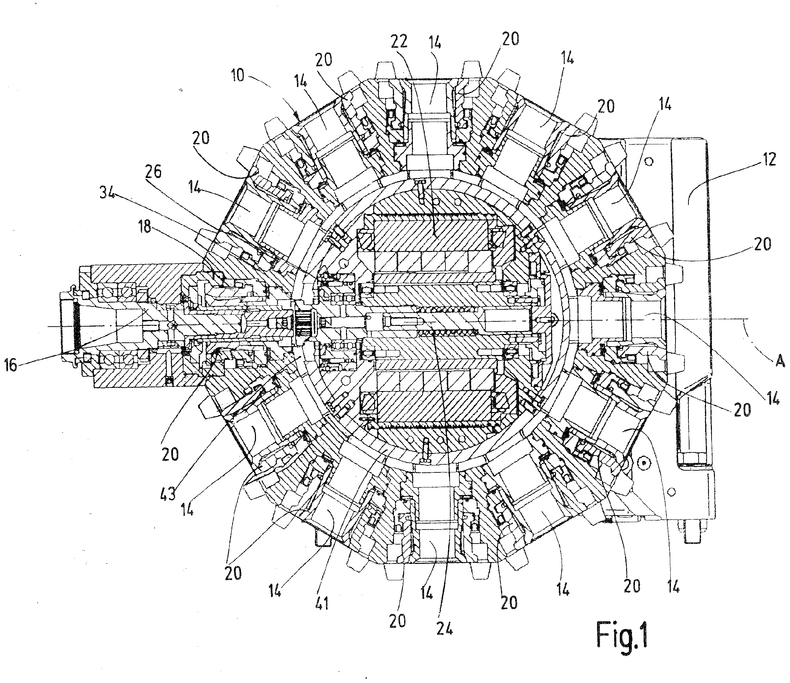

Fig. 1 zeigt eine Werkzeugscheibe 10 eines beispielhaften erfindungsgemä-ßen Werkzeugrevolvers. Der Werkzeugrevolver ist insbesondere für den Einsatz bei einer Werkzeugmaschine vorgesehen und mit dieser über einen Grundkörper 12 verbindbar. Die Werkzeugscheibe 10 ist schwenkbar zu einer Revolverachse am Grundkörper 12 angeordnet und weist außenumfangsseitig eine Vielzahl von, im gezeigten Ausführungsbeispiel zwölf, Aufnahmen 14 auf. In Fig. 1 ist eine Werkzeugspindel 16 Teil eines als Spindelkopf ausgebildeten Halters 18. Der Halter 18 weist den üblichen Aufbau eines Spindelkopfes auf, wie er beispielsweise in DE 101 21 694 A1 offenbart ist, und ist in den Figuren ohne ein darin aufgenommenes Bearbeitungswerkzeug gezeigt. Der in eine Aufnahme 14 aufgenommene Halter 18 befindet sich in der Arbeitsposition der Werkzeugscheibe 10, bezogen auf die Orientierung des Zeichnungsblattes der Fig. 1 in der 9 Uhr-Stellung. Jeder Aufnahme 14 zugeordnet ist eine Festlegeeinrichtung 20, um den jeweiligen Halter 18 in austauschbarer Weise an der Werkzeugscheibe 10 festzulegen.

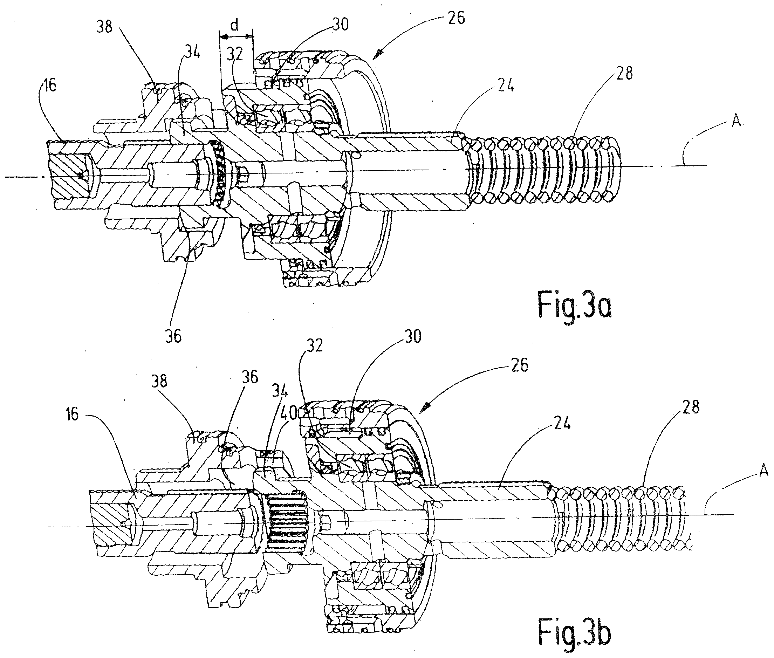

Der Werkzeugrevolver weist einen in die Werkzeugscheibe 10 integrierten Antrieb 22 in Form eines Elektromotors auf, der eine mehrteilige Antriebswelle 24 antreibt. Die Antriebswelle 24 liefert nicht nur den Werkzeugantrieb für das rotierende Bearbeitungswerkzeug, sondern auch den Antrieb für ein Lösen und Festlegen der Werkzeughalter 18 durch die jeweilige Festlegeeinrichtung 20 bei einem Werkzeughalterwechsel. Hierfür ist der Elektromotor 22 hinsichtlich Drehzahl, Drehrichtung und Drehwinkelgeschwindigkeit steuerbar. Mittels einer Kupplungseinrichtung 26, deren Einzelheiten den Figuren 3a und 3b deutlicher entnehmbar sind, ist die Antriebswelle 24 zwischen einer ausgekuppelten Position und einer eingekuppelten Position axial verschiebbar und auf diese Weise mit einer Abtriebswelle, hier der Werkzeugspindel 16, des jeweiligen in die Arbeitsposition eingeschwenkten Halters 18 kuppelbar. Bei ausgekuppeltem Antrieb 22 unter Stillsetzen des Bearbeitungswerkzeuges ist die Festlegeeinrichtung 20 des Halters 18 in der Arbeitsposition durch den Antrieb 22 betätigbar und die Antriebswelle 24 über einen Mitnehmer 34 mit einer Betätigungseinrichtung 38 (Fig. 3a und 3b) der Festlegeeinrichtung 20 gekuppelt.

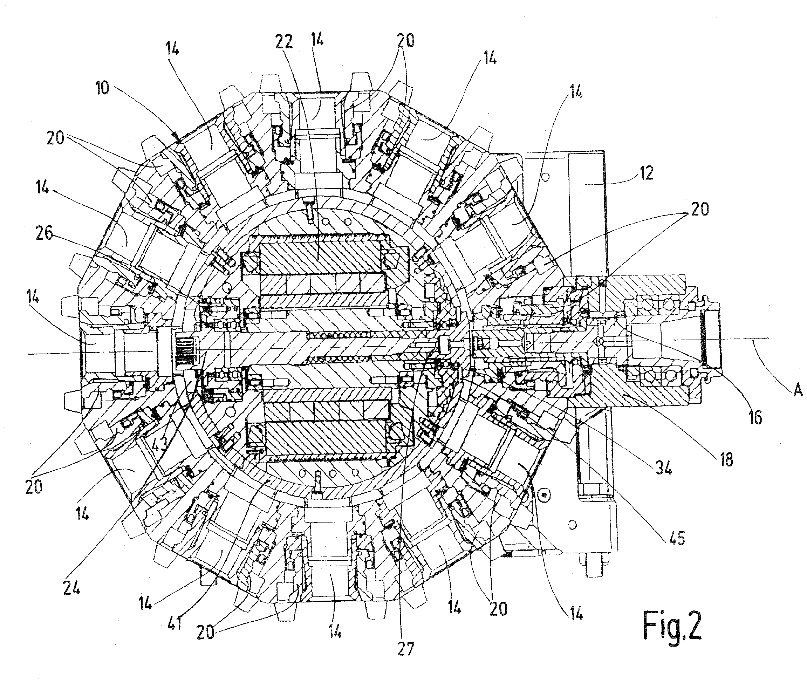

Die Antriebswelle 24 des Antriebes 22 und die Abtriebswelle 16 des Bearbeitungswerkzeuges sind drehbar um eine Antriebsachse A gelagert, wobei die Antriebsachse A die Revolverachse der schwenkbaren Werkzeugscheibe 10 senkrecht schneidet. Die Kupplungseinrichtung 26 ist koaxial zur Antriebsachse A ausgebildet und angeordnet. In dem in den Fig. 1 und 2 gezeigten Ausführungsbeispiel ist der Halter 18 ein Spindelkopf und dient der Aufnahme von nicht näher dargestellten Bearbeitungswerkzeugen in der Werkzeugspindel 16, die in eine umlaufende Drehbewegung durch die Antriebswelle 24 versetzt wird.

Die Darstellung der Fig. 2 entspricht weitestgehend der Darstellung der Fig. 1 und unterscheidet sich von dieser dadurch, dass der Halter 18 mit der Werkzeugspindel 16 in eine Wechselposition eingeschwenkt ist, die von der Arbeitsposition verschieden ist und im gezeigten Ausführungsbeispiel auf der gegenüberliegenden Seite der Arbeitsposition an der Werkzeugscheibe 10, bezogen auf die Orientierung des Zeichnungsblattes der Fig. 2 in der 3 Uhr-Stellung, liegt. Die zugehörige Festlegeeinrichtung 20 ist auch in der Wechselposition mittels des Antriebes 22 betätigbar, wobei die drehbar zur Antriebsachse A angeordnete Antriebswelle 24 mit einer Betätigungseinrichtung 38 (Fig. 3a und 3b) kuppelbar ist. Der wesentliche Unterschied zwischen dem in Fig. 1 gezeigten Werkzeugrevolver und dem in Fig. 2 gezeigten Werkzeugrevolver liegt in der Anordnung des Mitnehmers 34 an der Antriebswelle 24. Für einen Werkzeughalterwechsel in der Arbeitsposition gemäß Fig. 1 ist der Mitnehmer 34 auf der der Kupplungseinrichtung 26 zugeordneten Seite der Antriebswelle 24 angeordnet. Für einen Werkzeughalterwechsel in einer Wechselposition, die gegenüber der Arbeitsposition um 180° seitenversetzt ist, ist der Mitnehmer 34 an der der Kupplungseinrichtung 26 gegenüberliegenden Seite 27 der Antriebswelle 24 angeordnet.

Die Fig. 3a und 3b zeigen jeweils die Kupplungseinrichtung 26, teilweise im Längsschnitt, teilweise in Ansicht. Für den Antrieb eines in den Figuren nicht näher gezeigten Bearbeitungswerkzeuges ist die Antriebswelle 24 des Antriebes 22 (Fig. 1 und 2) axial verschiebbar entlang der Antriebsachse A in der Werkzeugscheibe 10 (Fig. 1 und 2) geführt und mittels einer Druckfeder 28 für die Bewegung in die in Fig. 3a gezeigte gekuppelte Position vorgespannt. Die Kupplungseinrichtung 26 ist als Schiebekupplung ausgerichtet und weist für die hydraulische Betätigung einen Druckraum 30 auf, der bei einer Druckversorgung mittels des Hydrauliksystems des Werkzeugrevolvers die Antriebswelle 24 zusammen mit ihrer Lagereinheit 32 in den Figuren nach rechts in die in Fig. 3b dargestellte ausgekuppelte Position gegen die Kraft der Druckfeder 28 verschiebt. In der in Fig. 3a gezeigten vordersten Kupplungsposition der Antriebswelle 24 ist diese samt Lagereinheit 32 um eine Distanz d gegenüber einem ortsfesten Teil der Schiebekupplung 26 herausgeschoben und mit ihrem vorderen Ende in Kupplungseingriff mit der Werkzeugspindel 16. Am vorderen, der Werkzeugspindel 16 zugeordneten Ende weist die Antriebswelle 24 weiter einen Mitnehmer 34 in Form eines Zweiflachs auf. In der zum Werkzeugantrieb eingekuppelten Position der Antriebswelle 24 dreht der Mitnehmer 34 frei in einem Ringraum 36, der von einer Betätigungseinrichtung 38 für die Festlegeeinrichtung 20 zumindest teilweise umfasst ist. Durch die Freidrehung im Ringraum 36 läuft der Mitnehmer 34 beim Antrieb der Werkzeugspindel 16 über die Antriebswelle 24 leer mit. Die Betätigungseinrichtung 38 ist koaxial zur Antriebsachse A angeordnet und umfasst die Werkzeugspindel 16 und die Antriebswelle 24 zumindest im eingekuppelten Zustand jeweils teilweise.

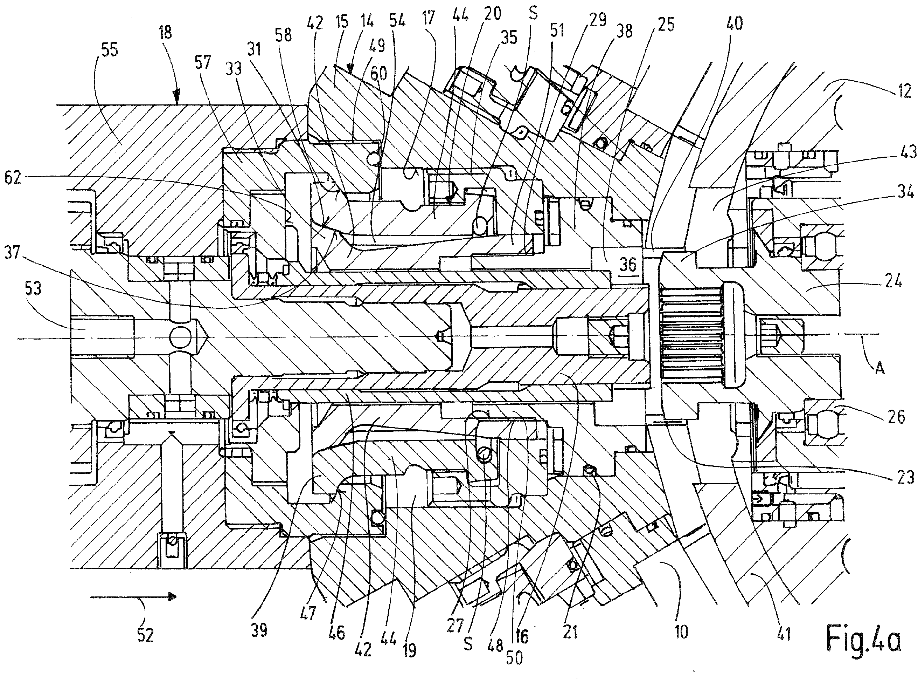

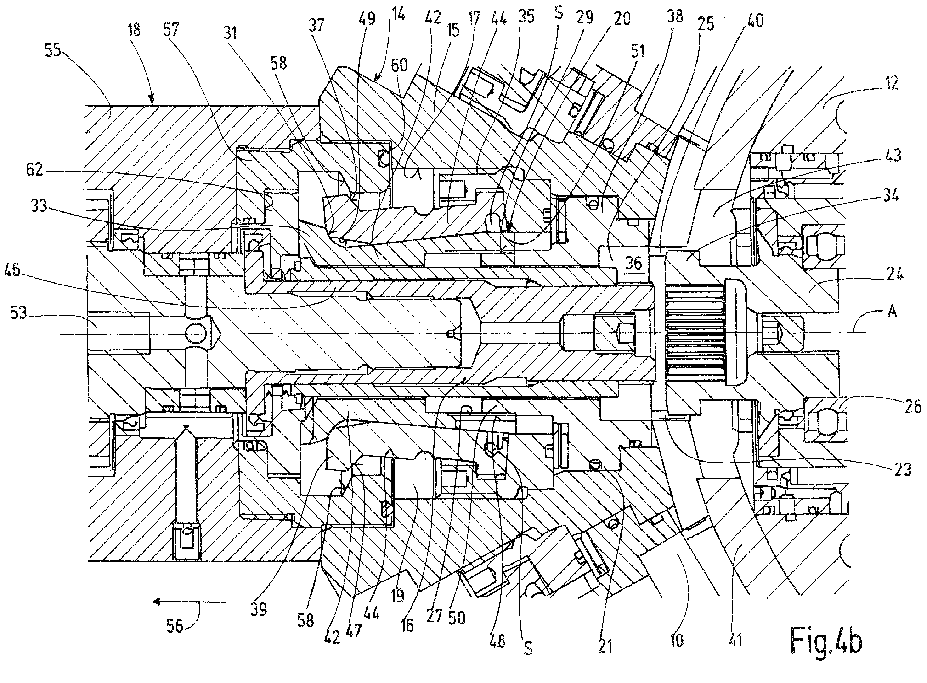

In der in Fig. 3b gezeigten hinteren Kupplungsposition ist das Bearbeitungswerkzeug dadurch stillgesetzt, dass durch eine Druckbeaufschlagung des Druckraums 30 die Antriebswelle 24 samt Lagereinheit 32 um die Distanz d in die Kupplungseinrichtung 26 hineingeschoben ist und die Antriebswelle 24 in dieser Position außer Eingriff mit der Werkzeugspindel 16 ist. In der vom Werkzeugantrieb ausgekuppelten Position der Antriebswelle 24 ist der Mitnehmer 34 aus dem Ringraum 36 herausgeführt und zum Antrieb der Festlegeeinrichtung 20 in formschlüssigem Eingriff in eine Mitnahme 40 (Fig. 4a, b) als Teil der zugehörigen Betätigungseinrichtung 38 eingekuppelt. In der in Fig. 3b gezeigten Position der Antriebswelle 24 aktiviert bei einer Unterbrechung des Antriebes der Werkzeugspindel 16 der an der Antriebswelle 24 angeordnete Mitnehmer 34 die Festlegeeinrichtung 20 (Fig. 1 und 2) über die Mitnahme 40 an der Betätigungseinrichtung 38.

Die Fig. 3a und 3b veranschaulichen die Funktionsweise der Kupplungseinrichtung 26 sowie der verschiedenen Kupplungszustände der Antriebswelle 24, die sowohl mit der Abtriebswelle 16 als auch mit der Betätigungseinrichtung 38 für die Festlegeeinrichtung 20 (Fig. 1 und 2) kuppelbar ist. Die Betätigungseinrichtung 38 umfasst die Abtriebswelle 16 in axialer Richtung zumindest teilweise und weist an ihrem der Antriebswelle 24 zugeordneten Ende die Mitnahme 40 auf, welche als Eingriffsschlitz für den Mitnehmer 34 in einer Mitnahmehülse 23 (vgl. Fig. 4a, b) der Betätigungseinrichtung 38 ausgebildet ist. Bei einer Drehbewegung der Werkzeugscheibe 10 ist die Betätigungseinrichtung 38 als vorderes werkzeugseitiges Kupplungsteil entlang einer Führungsschiene 41 (Fig. 1, 2, 4a und 4b) geführt, die sich am Außenumfang des Grundkörpers 12 des Werkzeugrevolvers konzentrisch zur Revolverachse erstreckt. Die Führungsschiene 41 hat beispielsweise die Form einer Rippe mit rechteckförmigem Querschnitt und ist an der Arbeitsposition durch eine Lücke 43 unterbrochen. Sobald die Antriebswelle 24 sowohl mit der Antriebswelle 16 als auch mit der Betätigungsweinrichtung 38 außer Eingriff ist sowohl mit der Abtriebswelle 16 als auch mit der Betätigungseinrichtung 38 können die in die einzelnen Aufnahmen 14 eingesetzten Werkzeughalter 18 entlang der Werkzeugscheibe 10 verschwenkt werden, wobei die Führungsschiene 41 jeweils einen Durchgang (in den Figuren nicht dargestellt) am topfartigen antriebsseitigen Ende der Betätigungseinrichtung 38 durchgreift. Auf der Werkzeughalterbahn außerhalb der Lücken 43 und 45 (Fig. 2) sind dadurch die Werkzeugspindel 16 und die Betätigungseinrichtung 38 gegen ein Verdrehen gesichert.

Bei einem Werkzeughalterwechsel in der Wechselposition gemäß Fig. 2 ist der Mitnehmer 34 in Form des Zweiflachs an der entgegengesetzten Seite 27 der Antriebswelle 24 angeordnet. In der in Fig. 3b gezeigten ausgekuppelten Position der Antriebswelle 24 ist das zugehörige Ende 27 der Antriebswelle 24 in Kupplungseingriff mit dem drehbar gelagerten Mitnehmer 34 in Form des Zweiflachs, mit dem das Ende 27 wieder außer Eingriff gelangt, wenn die Antriebswelle 24 die eingekuppelte Position gemäß Fig. 3a einnimmt. In dem Ausführungsbeispiel der Fig. 2 ist eine weitere Lücke 45 an der Führungsschiene 41 ausgebildet, so dass die Antriebswelle 24 mit dem Mitnehmer 34 in die Betätigungseinrichtung 38 einkuppeln kann. Hierbei ist die Anordnung vorzugsweise derart getroffen, dass die Mitnahme 40 an der Betätigungseinrichtung 38 des zugehörigen Halters 18 parallel zum Durchgang für die Führungsschiene 41 ausgerichtet ist. Weiter ist der Zweiflach 34 in der Ebene der Führungsschiene 41 liegend ausgerichtet, so dass der Zweiflach 34 beim Einschwenken des Werkzeughalters 18 ohne eine Drehbewegung der Antriebswelle 24 durch ein Einkuppeln in Richtung der Antriebsachse A in Eingriff mit der Mitnahme 40 an der Betätigungseinrichtung 38 kommt. Durch eine Drehbewegung der Antriebswelle 24 wird dann die Festlegeeinrichtung 20 zum Lösen des Werkzeughalters 38 aktiviert.

Die Fig. 4a und 4b zeigen jeweils einen Längsschnitt durch einen gegenüber den anderen Figuren vergrößert dargestellten Teilbereich des Werkzeugrevolvers mit einer Aufnahme 14 und einem Werkzeughalter 18. An dem in den Figuren rechts gezeigten Grundkörper 12 des Werkzeugrevolvers verläuft radial außen umlaufend die Führungsschiene 41, welche im gezeigten Teilbereich von einer Lücke 43 unterbrochen ist. Am Grundkörper 12 ist die Antriebswelle 24 um die Antriebsachse A drehbar gelagert. Weiter steht die Antriebswelle 24 in axialer Richtung, parallel zur Antriebsachse A, über den Grundkörper 12 vor und durchgreift dabei die Lücke 43 in der Führungsschiene 41. Am vorderen Ende weist die Antriebswelle 24 den Mitnehmer 34 auf, der als Zweiflach ausgebildet ist und in der gezeigten Schnittebene beidseits in radialer Richtung über den sich anschließenden Hauptteil der Antriebswelle 24 übersteht. Die Lücke 43 ist größer als die axiale Erstreckung der Kupplungsteile, insbesondere des Mitnehmers 34, am vorderen Ende der Antriebswelle 24 ausgebildet. Die Antriebswelle 24 ist über den Antrieb 22 (vgl. Fig. 1) rotatorisch antreibbar und über die in den Fig. 3a und 3b im Detail beschriebene Kupplungseinrichtung 26 axial verschiebbar entlang der Antriebsachse A gehalten.

Die in den Fig. 4a und 4b in der Mitte gezeigte Aufnahme 14 ist an der Werkzeugscheibe 10 angeordnet und weist einen fest mit der Werkzeugscheibe 10 verbundenen Hauptkörper 15 auf. Der Hauptkörper 15 ist in Bezug zur Antriebsachse A radial außen an der Aufnahme 14 angeordnet und weist innen ein gestuftes Profil 17 auf. Das Profil 17 begrenzt einen Bauraum 19, in dem die Festlegeeinrichtung 20 angeordnet ist. Der Hauptkörper 15, das Profil 17 und der Bauraum 19 sind rotationssymmetrisch zur Antriebsachse A ausgebildet. Die Festlegeeinrichtung 20 umfasst eine Betätigungseinrichtung 38 und mindestens ein Paar von Steuerklinken 42 und Rastklinken 44.

Die Betätigungseinrichtung 38 ist in einem der Antriebswelle 24 zugeordneten Bereich angeordnet, in den Figuren rechts, und in einer radial innen am Hauptkörper 15 verlaufenden Nut 21 drehbar gelagert. An ihrem der Antriebswelle 24 zugewandten Ende steht die Betätigungseinrichtung 38 mit einer Mitnahmehülse 23 über den Hauptkörper 15 der Aufnahme 14 vor. In der Mitnahmehülse 23 ist die Mitnahme 40 in Form eines Schlitzes ausgebildet, der korrespondierend zum Mitnehmer 34 an der Antriebswelle 24 ausgebildet ist. Am gegenüberliegenden, den Klinken 42, 44 zugeordneten Ende weist die Betätigungseinrichtung 38 eine Betätigungshülse 50 auf. Die rotationssymmetrisch zur Antriebsachse A ausgebildete Betätigungseinrichtung 38 erstreckt sich in axialer Richtung etwa über 1/3 des von der Aufnahme 14 definierten Werkzeughalteraufnahmeraums 25. In einem axial an die Mitnahmehülse 23 angrenzenden Bereich ist die Betätigungseinrichtung 38 in radialer Richtung verjüngt und definiert auf diese Weise einen Ringraum 36 als Teilraum des Werkzeughalteraufnahmeraums 25. Die radiale Erstreckung des Ringraums 36 entspricht zumindest der radialen Erstreckung des Mitnehmers 34 an der Antriebswelle 24.

Die jeweils paarweise angeordneten Klinken 42, 44 sind in einem dem Werkzeughalter 18 zugeordneten Bereich der Aufnahme 14, in den Figuren links, angeordnet. Die Steuerklinken 42 sind zu den Rastklinken 44 radial innenliegend angeordnet und einstückiger Bestandteil einer Steuerhülse 51, d.h. anstelle einer Vielzahl einzelner Steuerklinken 42 sind diese in ihrer Funktion zusammengefasst durch die Steuerhülse 51 als Ganzes realisiert. Die Steuerhülse 51 ist am der Betätigungseinrichtung 38 zugeordneten Ende angeordnet und weist dort ein Innengewinde 27 auf. Das Innengewinde 27 greift über eine Gewindestrecke 48 in ein korrespondierendes Außengewinde 29 an der Betätigungshülse 50 der Betätigungseinrichtung 38 ein. Die jeweilige Steuerklinke 42 erstreckt sich in axialer Richtung bis zum äußeren, dem Werkzeughalter 18 zugewandten Ende des Werkzeughalteraufnahmeraums 25. Von der Steuerhülse 51 aus verjüngt sich die Außenkontur der Steuerklinke 42 in axialer Richtung bis zu einer Steuerfläche 31, die radial außen an einer Verbreiterung 33 am äußeren Ende der Steuerklinke 42 ausgebildet ist.

Die Rastklinken 44 sind jeweils um eine Schwenkachse S schwenkbar am Hauptkörper 15 der Aufnahme 14 angeordnet. Die jeweilige Schwenkachse S ist im Bereich einer von außen zweiten Stufe des gestuften Profils 17 in dem Bereich vorgesehen, in dem die Steuerhülse 51 in Eingriff mit der Betätigungshülse 50 ist. Vom inneren, der Schwenkachse S zugeordneten Ende aus verläuft die Innenkontur der Rastklinke 44 in axialer Richtung gerade bis zu einer weiteren Steuerfläche 37, die radial innen an einer weiteren Verbreiterung 39 am äußeren Ende der zugehörigen Rastklinke 44 ausgebildet ist. Radial außen ist an der weiteren Verbreiterung 39 der Rastklinke 44 eine Anlagefläche 47 ausgebildet, die an der Außenkontur der Rastklinke 44 schräg verlaufend mit von innen nach außen zunehmendem Durchmesser ausgebildet ist. Die Anlagefläche 47 ist korrespondierend zu einer Festlegefläche 58 am Werkzeughalter 18 ausgebildet. Weiter ist an einer von außen ersten Stufe 49 des gestuften Profils 17 des Hauptkörpers 15 ein als axiale Ringfläche ausgebildeter Sitz 60 für den Werkzeughalter 18 vorgesehen.

Der Werkzeughalter 18 umfasst als zentralen Bestandteil die koaxial zur Antriebsachse A angeordnete Werkzeugspindel 16. Die Werkzeugspindel 16 ist in eine Aufnahmehülse 46 eingeschoben und mit dieser in den Werkzeughalteraufnahmeraum 25 der Aufnahme 14 eingesetzt. Die Werkzeugspindel 16 weist einen in der Darstellung der Fig. 4a und 4b nur teilweise gezeigten, konzentrisch zur Antriebsachse A ausgebildeten Werkzeugaufnahmeraum 53 auf. Die Werkzeugspindel 16 ist drehbar in einem Grundteil 55 des Werkzeughalters 18 gelagert. Das Grundteil 55 liegt am Hauptkörper 15 der Aufnahme 14 außen an und weist im dortigen Endbereich eine Ausnehmung mit einem gestuften Innenprofil auf. In die Ausnehmung ist ein Festlegeteil 57 eingesetzt, welches ein U-förmiges Profil mit einer gestuften Außenkontur aufweist. Das Festlegeteil 57 erstreckt sich in axialer Richtung von der Ausnehmung am Grundteil 55 des Werkzeughalters 18 bis zum Sitz 60 am Hauptkörper 15 der Aufnahme 14. Gegenüberliegend zu einer am Sitz 60 in Anlage kommenden Fläche ist die Festlegefläche 58 am Festlegeteil 57 ausgebildet. Die Festlegefläche 58 ist korrespondierend zur Anlagefläche 47 an der jeweiligen Rastklinke 44 schräg verlaufend ausgebildet.

In Fig. 4a ist die verrastete Stellung des durch die Steuerklinken 42 und Rastklinken 44 gebildeten Klinkentriebes gezeigt, in der der Halter 18 mit der Werkzeugscheibe 10 verbunden ist. In Fig. 4b ist die gelöste Stellung des Klinkentriebes gezeigt, in der die Steuerklinken 42 und Rastklinken 44 den Halter 18 freigeben. Um die Betätigungseinrichtung 38 mittels des Antriebs 22 (Fig. 1 und 2) anzutreiben, wird die Antriebswelle 24 in axialer Richtung derart verschoben, dass der Mitnehmer 34 in Eingriff mit der Mitnahme 40 kommt. Bei einem rotatorischen Antrieb der Antriebswelle 24 wird die Betätigungseinrichtung 38 der Festlegeeinrichtung 20 in eine drehende Bewegung versetzt. Über die Gewindestrecke 48 zwischen der Betätigungshülse 50 und der Steuerhülse 51 wird die Kraft von der Betätigungseinrichtung 38 auf die jeweilige Steuerklinke 42 übertragen und die drehende Bewegung der Betätigungseinrichtung 38 in eine translatorische Bewegung der Steuerklinke 42 umgesetzt.

Das Innengewinde 27 an der Steuerhülse 51 und das Außengewinde 29 an der Betätigungshülse 50 sind derart ausgebildet, dass bei einer Drehbewegung in Blickrichtung von der Antriebswelle 24 zur Betätigungseinrichtung 38 im Uhrzeigersinn die Steuerklinken 42 von außen nach innen, zur Antriebswelle 24 hin, bewegt werden. Bei einer Antriebsbewegung entgegen dem Uhrzeigersinn werden die Steuerklinken 42 in entgegengesetzter Richtung von innen nach außen bewegt.

In der in Fig. 4a gezeigten verrasteten Stellung schließen die paarweise einander zugeordneten Steuerklinken 42 und Rastklinken 44 in axialer Richtung gesehen bündig mit dem äußeren Ende des Werkzeughalteraufnahmeraums 25 ab. Die beiden zueinander korrespondierenden Steuerflächen 31, 37 liegen aneinander an und die Anlagefläche 47 der Rastklinke 44 liegt an der Festlegefläche 58 am Festlegeteil 57 an. Die über die Betätigungseinrichtung 38 auf die Steuerklinke 42 aufgebrachte Zugkraft wird über die aneinander anliegenden Flächen 31, 37, 47, 58 auf das Festlegeteil 57 und über dieses weiter an den Sitz 60 am Hauptkörper 15 der Aufnahme 14 übertragen. Insgesamt ergibt sich ein Kraftfluss von der Antriebswelle 24 über die Betätigungseinrichtung 38, die Klinken 42, 44 und das Festlegeteil 57 des Werkzeughalters 18 zum Hauptkörper 15 der Aufnahme 14. Dadurch, dass der Hauptkörper 15 fest mit der Werkzeugscheibe 10 verbunden ist, ist der Werkzeughalter 18 über den am Festlegeteil 57 angreifenden Klinkentrieb in verrasteter Stellung mit der Werkzeugscheibe 10 verbunden. Die Richtung der von dem Klinkentrieb aufgebrachten Zugkraft ist durch einen ersten Pfeil 52 verdeutlicht.

Zur Freigabe des Halters 18 wird die Antriebswelle 24 in entgegengesetzter Richtung gedreht und über die Betätigungshülse 50 die Steuerhülse 51 in eine Translationsbewegung von innen nach außen, von der Antriebswelle 24 weg, versetzt. In einer gleitenden Bewegung entlang der Steuerfläche 31 fällt die jeweilige Rastklinke 44 in einen Aufnahmeraum 54 zwischen Steuerklinke 42 und Rastklinke 44. Die Rastklinke 44 wird so weit um die Schwenkachse S verschwenkt, bis die Rastklinke 44 mit ihrer Innenkontur in Anlage mit der Außenkontur der zugehörigen Steuerklinke 42 ist. Durch diese Schwenkbewegung kommt die Anlagefläche 47 der Rastklinke 44 außer Eingriff mit der Festlegefläche 58 am Festlegeteil 57. Somit ist der Werkzeughalter 18 gelöst und kann vom Sitz 60 am Halter 14 abgenommen werden. Fig. 4b veranschaulicht, dass die Rastklinke 44 in der gelösten Stellung zumindest so weit in Richtung der Steuerklinke 42 eingeschwenkt ist, dass das Festlegeteil 57 des Werkzeughalters 18 in axialer Richtung hindernisfrei an der weiteren Verbreiterung 39 der Rastklinke 44 vorbei vom Halter 14 abgenommen werden kann. Die Abnahme des Werkzeughalters 18 von der Aufnahme 14 wird dadurch erleichtert, dass die von der Betätigungseinrichtung 38 auf die Steuerklinke 42 einwirkende Kraft auf eine Innenfläche 62 des Festlegeteils 57 übertragen wird. Mit einer auf diese Weise vorgegebenen Lösekraft heben die in Richtung des Halters 18 bewegten Steuerklinken 42 diesen von seinem Sitz 60 an der Werkzeugscheibe 10 ab. Die Richtung der Krafteinwirkung ist mit einem zweiten Pfeil 56 veranschaulicht.

Sobald ein von der Werkzeugscheibe 10 abzunehmender Halter 18 über die Festlegeeinrichtung 20 gelöst ist, kann ein Handhabungssystem, wie ein Roboter, den Halter 18 vorzugsweise an Greiferrillen greifen und von der Werkzeugscheibe 10 abnehmen. Der Roboter (in den Figuren nicht dargestellt) legt dann den Halter 18 in einem Magazin (in den Figuren nicht dargestellt) ab, holt sich dort den einzuwechselnden Halter 18 und positioniert diesen in der Wechselposition an der Werkzeugscheibe 10. Sobald der neu eingesetzte Halter 18 durch die Festlegeeinrichtung 20 an der Werkzeugscheibe 10 festgelegt ist, gibt der Roboter den Halter 18 frei. Sofern dieser Werkzeughalterwechsel in einer separaten Wechselposition durchgeführt worden ist, wird der neu eingesetzte Halter 18 bei Bedarf in die Arbeitsposition verschwenkt. In der Regel ist der Werkzeugrevolver derart ausgestaltet, dass sich nur in der Arbeitsposition ein in den Halter 18 aufgenommenes Bearbeitungswerkzeug über die Antriebswelle 24 antreiben lässt. Ein Bearbeitungswerkzeug wird vorzugsweise an einem von der Werkzeugscheibe 10 abgenommenen Halter 18 abgenommen, eingesetzt oder ausgetauscht. Ein Bearbeitungswerkzeug kann jedoch auch in der Wechselposition vor oder nach einem Werkzeughalterwechsel am zugehörigen Halter 18 festgelegt oder von diesem abgenommen werden. Insgesamt steht ein hochflexibler Werkzeughalterwechsel an einem Werkzeugrevolver für unterschiedlichste Anforderungen bereit.

## Patentansprüche

1. Werkzeugrevolver, insbesondere vorgesehen für den Einsatz bei einer Werkzeugmaschine, mit einer schwenkbaren Werkzeugscheibe (10), die außenumfangsseitig eine Vielzahl von Aufnahmen (14) für mit Bearbeitungswerkzeugen versehenen Haltern (18) aufweist, die mittels einer Festlegeeinrichtung (20) in austauschbarer Weise an der Werkzeugscheibe (10) festgelegt sind und die jeweils in eine Arbeitsposition eingeschwenkt den Antrieb des zugehörigen Bearbeitungswerkzeuges mittels eines Antriebes (22) ermöglichen, der hierfür mittels einer Kupplungseinrichtung (26) mit einer Abtriebswelle (16) des jeweiligen Halters (18) kuppelbar ist, **dadurch gekennzeichnet, dass** bei ausgekuppeltem Antrieb (22) unter Stillsetzen des Bearbeitungswerkzeuges die Festlegeeinrichtung (20) mittels dieses Antriebes (22) betätigbar ist, und dass die Festlegeeinrichtung (20) einen Klinkentrieb aufweist, mit paarweise einander zugeordneten Steuer- (42) und Rastklinken (44), die von einer Betätigungseinrichtung (38) derart ansteuerbar sind, dass sie in ihrer verrasteten Stellung einen Halter (18) mit der Werkzeugscheibe (10) verbinden und in ihrer gelösten Stellung diesen Halter (18) freigeben.

2. Werkzeugrevolver nach Anspruch 1, **dadurch gekennzeichnet, dass** die Festlegeeinrichtung (20) mittels des Antriebes (22) in der Arbeitsposition und/oder in einer Wechselposition betätigbar ist, die von der Arbeitsposition verschieden, vorzugsweise auf der gegenüberliegenden Seite der Arbeitsposition, an der Werkzeugscheibe (10) liegt.

3. Werkzeugrevolver nach Anspruch 1 oder 2, **dadurch gekennzeichnet, dass** durch eine drehende Bewegung der Betätigungseinrichtung (38) mittels des Antriebes (22) diese Drehbewegung in eine translatorische Bewegung (52, 56) für die Steuerklinken (42) umgesetzt ist, die in einer Richtung (56) das Einfallen der Rastklinken (44) in deren gelösten Stellung in einen Aufnahmeraum (54) der Steuerklinken (42) und in der entgegengesetzten Richtung (52) das Verdrängen der Rastklinken (44) aus dem Aufnahmeraum (54) in Richtung ihrer verrasteten Stellung bewirkt.

4. Werkzeugrevolver nach einem der vorstehenden Ansprüche, **dadurch gekennzeichnet, dass** bei einem Verbringen der Rastklinken (44) in ihre gelöste Stellung die Steuerklinken (42) in Richtung des Halters (18) bewegt sind und diesen mit einer vorgebbaren Lösekraft von seinem Sitz (60) an der Werkzeugscheibe (10) abheben.

5. Werkzeugrevolver nach einem der vorstehenden Ansprüche, **dadurch gekennzeichnet, dass** die Rastklinken (44) jeweils um eine Schwenkachse (S) drehbar gelagert sind, und dass die Steuerklinken (42) einstückiger Bestandteil einer Steuerhülse (51) sind, die entlang einer Aufnahmehülse (46) bewegbar geführt ist, die zumindest ein Teil der Abtriebswelle (16) für das jeweilige Bearbeitungswerkzeug umfasst.

6. Werkzeugrevolver nach Anspruch 5, **dadurch gekennzeichnet, dass** die Betätigungseinrichtung (38) in Richtung ihres einen freien Endes über eine Gewindestrecke (48) in Eingriff mit der Steuerhülse (51) ist und in Richtung ihres anderen freien Endes eine Mitnahme (40) aufweist für den Angriff eines Mitnehmers (34) einer Antriebswelle (24) des Antriebs (22).

7. Werkzeugrevolver nach Anspruch 6, **dadurch gekennzeichnet, dass** für den Antrieb des Bearbeitungswerkzeuges mittels der Kupplungseinrichtung (26) und das Ansteuern der Festlegeeinrichtung (20) in der Arbeitsposition die Antriebswelle (24) des Antriebes (22) axial verschiebbar in der Werkzeugscheibe (10) geführt ist und in ihrer vordersten Kupplungsposition unter Durchgreifen der Mitnahme (40) mit ihrem Mitnehmer (34) das Bearbeitungswerkzeug des Halters (18) bei inaktiver Festlegeeinrichtung (20) antreibbar ist und in einer demgegenüber rückgezogenen Position bei Unterbrechung dieses Antriebs der an der Antriebswelle (24) angeordnete Mitnehmer (34) unter Aktivieren der Festlegeeinrichtung (20) in Anlage mit der Mitnahme (40) der Betätigungseinrichtung (38) kommt.

8. Werkzeugrevolver nach Anspruch 6 oder 7, **dadurch gekennzeichnet, dass** für ein Ansteuern der Festlegeeinrichtung (20) in der Wechselposition die Antriebswelle (24) den Mitnehmer (34) auf ihrer der Kupplungseinrichtung (26) gegenüberliegenden Seite (27) aufweist.

9. Werkzeugrevolver nach einem der vorstehenden Ansprüche, **dadurch gekennzeichnet, dass** der Halter (18) ein Spindelkopf ist.

## Claims

1. Tool turret, in particular intended for use with a machine tool, having a pivotable tool disc (10), which has on its outer circumference a plurality of receptacles (14) for holders (18) provided with machining tools, said holders being attached to the tool disc (10) in an exchangeable manner by means of a fixing device (20) and, each swivelled into a working position, permit the assigned machining tool to be driven by means of a drive (22), which for this purpose can be coupled to a driven shaft (16) of the respective holder (18) by means of a coupling device (26), **characterised in that** the clamping device (20) can be actuated by means of this drive (22) when said drive (22) is disengaged while the machining tool is stopped, and **in that** the clamping device (20) has a pawl arrangement with control pawls (42) and latching pawls (44) which are assigned to each other in pairs and can be actuated by an actuating device (38) in such a manner that, in their latched position, they connect a holder (18) to the tool disc (10) and, in their released position, release this holder (18).

2. Tool turret according to claim 1, **characterised in that** the clamping device (20) can be actuated by means of the drive (22) in the working position and/or in a change position which, unlike the working position, is located on the tool disc (10), preferably on the opposite side to the working position.

3. Tool turret according to claim 1 or 2, **characterised in that**, by a rotary movement of the actuating device (38) by means of the drive (22), this said rotary movement is converted into a translational movement (52, 56) for the control pawls (42), which in one direction (56) causes the engagement of the latching pawls (44) in their released position in a receiving space (54) of the control pawls (42) and in the opposite direction (52) causes the displacement of the latching pawls (44) out of the receiving space (54) towards their latched position.

4. Tool turret according to one of the preceding claims, **characterised in that** when the latching pawls (44) are brought into their released position, the control pawls (42) are moved towards the holder (18) and lift it off its seat (60) on the tool disc (10) with a predefinable release force.

5. Tool turret according to one of the preceding claims, **characterised in that** the latching pawls (44) are each supported pivotably about a pivot axis (S), and **in that** the control pawls (42) are an integral component of a control sleeve (51) which is movably guided along a receiving sleeve (46) which encloses at least part of the driven shaft (16) for the respective machining tool.

6. Tool turret according to claim 5, **characterised in that** the actuating device (38) engages towards its one free end with the control sleeve (51) via a threaded section (48) and towards its other free end has a catch (40) for engaging a driver (34) of a drive shaft (24) of the drive (22).

7. Tool turret according to claim 6, **characterised in that** the drive shaft (24) of the drive (22) is guided so as to be axially displaceable in the tool disc (10) for driving the machining tool by means of the coupling device (26) and for controlling the clamping device (20) in the working position and, in its foremost coupling position, the machining tool of the holder (18) can be driven while its driver (34) engages through the catch (40) when the clamping device (20) is inactive and, in a retracted position with respect thereto, when this drive is interrupted, the driver (34) arranged on the drive shaft (24) comes into contact with the catch (40) of the actuating device (38) while activating the clamping device (20).

8. Tool turret according to claim 6 or 7, **characterised in that**, the drive shaft (24) has the driver (34) on its side (27) opposing the coupling device (26) for controlling the clamping device (20) in the change position.

9. Tool turret according to one of the preceding claims, **characterised in that** the holder (18) is a spindle head.

## Revendications

1. Tourelle porte-outils, prévue notamment pour être utilisée dans une machine-outil, comprenant un disque (10) d'outil pivotant, qui a du côté du pourtour extérieur une pluralité de logements (14) de supports (18) pourvus d'outils d'usinage, qui au moyen d'un dispositif (20) de fixation sont fixés d'une manière échangeable au disque (10) d'outil et qui, respectivement pivotés dans une position de travail, rendent possible l'entraînement de l'outil d'usinage associé au moyen d'un entraînement (22), qui à cet effet peut, au moyen d'un dispositif (26) d'accouplement, être accouplé à un arbre (16) de sortie du support (18) respectif, **caractérisée en ce que**, lorsque l'entraînement (22) est découplé avec mise à l'arrêt de l'outil d'usinage, le dispositif (20) de fixation peut être actionné au moyen de cet entraînement (22) et **en ce que** le dispositif (20) de fixation a une transmission à cliquet ayant des cliquets de commande (42) et d'encliquetage (44) associés l'un à l'autre par paire, qui peuvent être commandés par un dispositif (38) d'actionnement de manière à ce que, dans leur position encliquetée, ils relient un support (18) au disque (10) à outil et, dans leur position libérée, libèrent ce support (18).

2. Tourelle porte-outils suivant la revendication 1, **caractérisée en ce que** le dispositif (20) de fixation peut au moyen de l'entraînement (22) être actionné dans la position de travail et/ou dans une position de remplacement qui, différente de la position de travail, se trouve de préférence du côté opposé à la position de travail sur le disque (10) à outil.

3. Tourelle porte-outils suivant la revendication 1 ou 2, **caractérisée en ce que** par un mouvement tournant du dispositif (38) d'actionnement au moyen de l'entraînement, (22) ce mouvement tournant est transformé en un mouvement (52, 56) de translation des cliquets (42) de commande qui, dans un sens (56), fait tomber les cliquets (44) d'encliquetage dans leur position libérée dans un espace (54) de réception des cliquets (42) de commande et, dans le sens (52) contraire, provoque le refoulement des cliquets (44) d'encliquetage de l'espace (54) de réception en direction de leur position encliquetée.

4. Tourelle porte-outils suivant l'une des revendications précédentes, **caractérisée en ce, que** lorsque les cliquets (44) d'encliquetage viennent dans leur position libérée, les cliquets (42) de commande sont déplacés en direction du support (18) et soulèvent celui-ci, par une force de libération pouvant être donnée à l'avance, de son siège (60) sur le disque (10) à outil.

5. Tourelle porte-outils suivant l'une des revendications précédentes, **caractérisée en ce que** les cliquets (44) d'encliquetage sont montés tournants respectivement autour d'un axe (S) de pivotement et **en ce que** les cliquets (42) de commande sont une partie constitutive d'une seule pièce d'un manchon (51) de commande, qui est guidé avec possibilité de se déplacer le long d'un manchon (46) de réception, qui comprend au moins une partie de l'arbre (16) de sortie de l'outil d'usinage respectif.

6. Tourelle porte-outils suivant la revendication 5, **caractérisée en ce que** le dispositif (38) d'actionnement est, dans la direction de l'une de ses extrémités libres, en prise avec le manchon (51) de commande par une section (48) filetée et a, dans la direction de son autre extrémité libre, un entraîneur (40) pour l'attaque d'un entraîneur (34) d'un arbre (24) de l'entraînement (22).

7. Tourelle porte-outils suivant la revendication 6, **caractérisée en ce que**, pour l'entraînement de l'outil d'usinage au moyen du dispositif (26) d'accouplement et la commande du dispositif (20) de fixation dans la position de travail, l'arbre (24) de l'entraînement (22) est guidé à coulissement axial dans le disque (10) à outil et, dans sa position d'accouplement la plus en avant par prise de l'entraîneur (40) avec son entraîneur (34), l'outil d'usinage du support (18) peut être entraîné alors que le dispositif (20) de fixation st inactif et, dans une position en retrait par rapport à cela, lors de l'interruption de cet entraînement, l'entraîneur (34), disposé sur l'arbre (24) d'entraînement vient, avec activation du dispositif (20) de fixation, en contact avec l'entraîneur (40) du dispositif (38) d'actionnement.

8. Tourelle porte-outils suivant la revendication 6 ou 7, **caractérisée en ce que**, pour une commande du dispositif (20) de fixation dans la position de remplacement, l'arbre (24) d'entraînement a l'entraîneur (34) sur son côté (27) opposé au dispositif (26) d'accouplement.

9. Tourelle porte-outils suivant l'une des revendications précédentes, **caractérisée en ce que** le support (18) est une tête de broche.
